# EUROPÄISCHE PATENTSCHRIFT

(11) **EP 0 439 599 B1**
(45) Veröffentlichungstag und Bekanntmachung des Hinweises auf die Patenterteilung: **05.05.1993**
(21) Anmeldenummer: 90913143.5
(22) Anmeldetag: 20.08.1990
(51) Int. Cl.: B01J 8/12, B01J 8/16, B01D 46/34

(54) **SCHÜTTGUTREAKTOR**
BULK MATERIALS REACTOR
REACTEUR POUR PRODUITS EN VRAC

(30) Priorität: 19.08.1989 DE 3927417; 07.12.1989 DE 3940412
(43) Veröffentlichungstag der Anmeldung: 07.08.1991
(73) Patentinhaber: NYMIC ANSTALT, FL-9494 Schaan (LI)
(72) Erfinder: RITTER, Jürgen, D-7000 Stuttgart 75 (DE)
(74) Vertreter: Lins, Edgar, Dipl.-Phys. Dr.jur.
(86) Internationale Anmeldenummer: EP9001354
(87) Internationale Veröffentlichungsnummer: WO9102586

(56) Entgegenhaltungen:
- WO-A-89/07485
- DE-A- 3 213 664
- DE-A- 3 411 801
- US-A- 2 766 534
- US-A- 3 749 549

## Beschreibung

Die Erfindung betrifft einen Schüttgutreaktor mit einem in einem Reaktorgehäuse angeordneten, aus dem Schüttgut aufgebauten Wanderbett mit einer Eintragvorrichtung auf der Oberseite und einer Austragvorrichtung auf der Unterseite des Wanderbettes sowie mit einer Eintrittsöffnung und einer Austrittsöffnung für ein Gas in den bzw. aus dem Reaktor, in dem das Wanderbett an seiner Unterseite durch kaskadenförmig gestaffelte Platten, die sich in überlappender Form zu den Seitenwänden des Reaktors hin erstrecken, begrenzt ist.

Derartige Schüttgutreaktoren werden für vielfältige Anwendungsfälle benutzt. Sie dienen als Filter zur mechanischen Ausfilterung von in einem Gas enthaltenden Partikeln durch das Schüttgut, zur Adhäsion von in dem Gas enthaltenden Materialien an den Schüttgutpartikeln sowie zur thermochemischen Behandlung des Schüttgutes mit Hilfe des das Schüttgut durchströmenden Gases. Das Wanderbett wird dabei dadurch gebildet, daß am unteren Ende Schüttgut abgezogen und in gleicher Menge am oberen Ende Schüttgut eingetragen wird. Dadurch wird erreicht, daß das Schüttgut immer wieder erneuert wird, so daß beispielsweise belastetes Schüttgut am unteren Ende des Wanderbetts abgezogen wird, um beispielsweise nach einer Regeneration auf der Oberseite des Wanderbetts wieder zugeführt zu werden. Für bestimmte Anwendungsfälle ist es auch denkbar, das belastete Schüttgut zu entsorgen und dem Wanderbett jeweils frisches Schüttgut zuzuführen. Im Falle der thermochemischen Behandlung des Schüttgutes durch ein Gas wird am unteren Ende das behandelte Schüttgut gewonnen, während am oberen Ende des Wanderbettes neues Schüttgut zur thermochemischen Behandlung eingeführt wird.

In allen Anwendungsfällen besteht der Wunsch, das Schüttgut möglichst gleichmäßig durch das Wanderbett laufen zu lassen, fein dosiert zu- und abführen zu können und für das durch das Schüttgut strömende Gas in allen Fällen möglichst gleiche Durchströmungswege zur Verfügung zu stellen.

Die bisher bekannten Austragvorrichtungen für das Schüttgut aus dem Wanderbett weisen eine Reihe von Nachteilen auf. Sie erlauben im allgemeinen keine ausreichend feine Dosierung, so daß es nicht zu einer kontinuierlichen Wanderung des Wanderbettes kommt sondern das Schüttgut aus dem Wanderbett mehr oder weniger diskontinuierlich ausgetragen wird. Darüber hinaus führen die bekannten Austragvorrichtungen zu einer erheblichen Verringerung der durchströmten Oberfläche, so daß es im Bereich der Austragvorrichtung zu einer erheblichen Verringerung des Strömungsquerschnittes kommt, der die gleichmäßige Durchströmung des Schüttgutes durch das Gas verhindert. Dies gilt insbesondere, wenn derartige bekannte Schüttgutreaktoren im Gegenstrom gefahren werden, das Gas also entgegen der Wanderrichtung des Schüttgutes in dem Wanderbett durch das Wanderbett strömt. Obwohl diese Strömungsführung grundsätzlich vorteilhaft ist, läßt sie sich mit den bekannten Schüttgutreaktoren nicht zufriedenstellend verwirklichen.

In der US 2 766 534 ist ein Schüttgutreaktor der eingangs erwähnten Art beschrieben, in dem das Wanderbett an unteren Grenzflächen durch gestaffelt einander überlappend angeordnete Platten begrenzt wird, durch die Gas im Gegenstrom zu der Wanderrichtung des Wanderbettes durch das Wanderbett strömen kann. Der Transport des Wanderbettes erfolgt durch Öffnen einer Absperrvorrichtung in einem Auslaufstutzen des Reaktors.

Ein fein dosierter Transport des Wanderbettes ist dadurch naturgemäß nicht möglich.

Durch DE-A 32 13 664 A1 ist ein Schüttgutfilter zum Entstauben von Staubgasen bekannt. Dieser Schüttgutreaktor weist einen Innenraum auf, in den das Gas über seine gesamte Höhe eingeleitet wird. Dieser Innenraum wird seitlich begrenzt durch Schüttgut, das auf untereinander angeordneten Platten aufliegt und dort einen Böschungswinkel ausbildet. Das Gas durchströmt das Schüttgut radial nach außen und tritt in einen äußeren Sammelraum ein. Der Abtransport von mit Staub beladenem Schüttgut erfolgt durch eine seitliche Hin- und Herbewegung der Platten, auf denen das Schüttgut aufliegt. Durch die Bewegung der Platten ändert sich der Böschungswinkel und das Schüttgut wird von der Oberfläche des Böschungswinkels abgezogen. Eine derartige Anordnung ist aufgrund der speziellen ringförmigen Ausbildung des Wanderbettes nicht sehr effektiv. Gegenüber einem den Reaktor ausfüllenden Wanderbett, das auf einer Austragvorrichtung auf seiner Unterseite aufliegt, wird nur eine geringe Durchströmung des Schüttgutes erreicht. Die vorliegende Erfindung geht daher von einem Wanderbett aus, das eine Austragvorrichtung an seiner Unterseite aufweist.

Der Erfindung liegt daher die Aufgabe zugrunde, einen Schüttgutreaktor der eingangs erwähnten Art so auszubilden, daß das Schüttgut aus dem Wanderbett gut dosierbar austragbar ist und daß eine gleichmäßige und weitgehend gleiche Strömungswege gewährleistende Durchströmung des Wanderbettes durch das Gas gegeben ist.

Diese Aufgabe wird bei einem Schüttgutreaktor der eingangs erwähnten Art erfindungsgemäß dadurch gelöst, daß die Platten einen solchen Höhenabstand voneinander und einen solchen Überlappungsgrad aufweisen, daß sich auf den Platten ein Schüttwinkel des Schüttgutes ausbildet, durch den das Durchrieseln von Schüttgut im Ruhezustand verhindert wird, und daß die Platten mit einem Schwingantrieb verbunden sind, so daß durch die Bewegung der Platten das Schüttgut von ihren Kanten durch die Plattenzwischenräume herunterfällt und daß sich die Kanten der Platten auf einer Neigungslinie befinden, die parallel zur abfallenden Oberfläche des Wanderbettes verläuft.

Der erfindungsgemäße Schüttgutreaktor verfügt über ein fein dosierbares Austragsystem, bei dem der Austrag durch die Bewegung der Austragplatten steuerbar ist. Insbesondere wenn der Schüttgutreaktor vom Gas im Gegenstrom durchströmt wird, ergibt sich eine sehr große Gasdurchtrittsfläche, die unter Umständen größer sein kann als der Querschnitt des Schüttgutreaktors selbst. Dies liegt daran, daß die Gasdurchtrittsfläche durch die Schüttwinkel in den einzelnen Stufen des kaskadenförmig gestaffelt angeordneten Austragplatten gebildet wird und diese Schüttgutwinkel einander überlappen können. Die kaskadenförmige Anordnung der Austragplatten würde bei einem herkömmlichen Aufbau des Wanderbettes zu unterschiedlichen Strömungswegen durch das Schüttgut führen, da das oberhalb einer oberen Austragplatte eintretende Gas einen kürzeren Weg durch das üblicherweise eine horizontale Oberfläche bildende Schüttgut zurückzulegen hätte, als Gas, das oberhalb einer unteren Austragplatte eintritt. Erfindungsgemäß wird dieser Mangel dadurch beseitigt, daß die Oberfläche des Schüttgutes entsprechend der Staffelung der Austragplatten seitlich abfällt. In einer besonders bevorzugten Ausführungsform wird dies dadurch erreicht, daß das Schüttgut dem Wanderbett vom oberen Ende her zugeführt wird, so daß sich zur Seitenwand hin ein für das Schüttgut typischer Schüttgutwinkel ausbildet. Hieraus folgt, daß die Neigung der Staffelung der Austragplatten entsprechend dem verwendeten Schüttgut gewählt wird und etwa dem sich bei dem betreffenden Schüttgut einstellenden Schüttgutwinkel entspricht. Der erfindungsgemäße Schüttgutreaktor bietet daher den Vorteil, daß durch die Austragvorrichtung sowohl eine feine Dosierung des Austrags möglich ist als auch eine Verengung des Strömungsquerschnitts vermeidbar ist und daß für das durch das Wanderbett strömende Gas gleiche Strömungswege vorhanden sind.

Der erfindungsgemäße Schüttgutreaktor läßt sich mit allen möglichen Filtermedien betreiben, so beispielsweise mit inertem keramischen Material oder auch mit bestimmten Aschefraktionen, die beispielsweise beim Betrieb eines Kraftwerks anfallen und zur Abscheidung von Reststäuben geeignet sind. Diese werden nach der Belastung mit den Reststäuben in üblicher Weise entsorgt, während andere Filtermedien regelmäßig wieder aufbereitet werden.

Der erfindungsgemäße Schüttgutreaktor erlaubt die Verwendung unterschiedlicher Wanderbetthöhen, so daß regelmäßig für gröberes Schüttgut ein höheres Wanderbett zur Anwendung kommt als bei sehr feinkörnigem Schüttgut.

Der erfindungsgemäße Schüttgutreaktor ist für alle Anwendungsarten derartiger Reaktoren geeignet, läßt sich also für die Abscheidung von Stäuben, für die Absorption von Gasbestandteilen und für die thermochemische Behandlung des Schüttgutes durch ein durchströmendes Gas verwenden. Die erfindungsgemäßen Schüttgutreaktoren lassen sich ohne Probleme für Einsatzbereiche bis 1000° C auslegen und sind auch zur Abscheidung von klebrigen oder adhäsiven Stäuben geeignet.

In einer bevorzugten Ausführungsform sind die Austragplatten in ihrer Längsrichtung hin- und herbewegbar. Dabei ist der Schüttgutreaktor vorzugsweise mit einer geringeren Breite als Tiefe aufgebaut und die Austragplatten sowie andere bewegbare Teile liegen mit ihrer Längsrichtung in Richtung der großen Tiefe und erstrecken sich in ihrer gestaffelten Anordnung über die Breite des Schüttgutreaktors.

Besonders bevorzugt ist die Ausführungsform, in der die Austragplatten mit einem außerhalb des Reaktorgehäuses angeordneten Schwingantrieb verbunden sind. Der Schwingantrieb kann in einer für die Schwingtechnik herkömmlichen Weise ausgebildet sein und die sich in den Innenraum erstreckenden Austragplatten einzeln oder als Einheit antreiben.

In einer bevorzugten Ausführungsform ist das Wanderbett symmetrisch mit zwei abfallenden Flächen an der Oberfläche ausgebildet, wobei entsprechend symmetrisch zwei zu den Wänden des Reaktorgehäuses kaskadenförmig abfallende Gruppen von Austragplatten angeordnet sind. In dieser Anordnung bildet sich über die Tiefe des Reaktorgehäuses ein gleichmäßiges Profil mit zwei zu den Seiten hin abfallenden Oberflächen des Wanderbettes aus. Die abfallenden Oberflächen des Wanderbettes entsprechen vorzugsweise dem sich bei dem speziellen Schüttgut ausbildenden Schüttwinkel, so daß keine besonderen Maßnahmen erforderlich sind, um die Neigung der Oberfläche des Wanderbettes einzustellen. Dementsprechend wird die Neigung der kaskadenförmigen Staffelung der Austragplatten dem verwendeten Schüttgut angepaßt, damit die Neigung dem sich ausbildenden Schüttgutwinkel etwa entspricht.

Zur Vermeidung ungleichmäßiger Strömungsverhältnisse ist es zweckmäßig, wenn ein Mittelstück das Wanderbett teilt. Das Mittelstück weist dabei vorzugsweise eine solche Breite auf, daß sich auf der obersten Austragplatte ein etwa gleicher Schüttwinkel ausbildet wie auf den darunter angeordneten Austragplatten. Darüber hinaus wird durch das Mittelstück gesichert, daß an jeder Eintrittsfläche die gleiche Gasmenge eintreten kann.

Für die Ausbildung der schräg abfallenden Oberfläche des Wanderbettes ist es zweckmäßig, eine mittige Eintragvorrichtung vorzusehen, die über die Länge des Schüttgutreaktors gleichmäßig Schüttgut in der Menge nachliefert, in der das Schüttgut über die Austragplatten ausgetragen wird. Dies kann durch eine sich über die Tiefe des Reaktors erstreckende Zuführrinne geschehen, die über ihre Längsrichtung mit einem durchgehenden Längsschnitt oder mit einer Vielzahl von Öffnungen versehen ist. Vorzugsweise ist auch die Zuführrinne durch einen Schwingantrieb angetrieben. Allerdings sind auch andere Verteilungsmöglichkeiten über die Länge der Zuführrinne denkbar, beispielsweise durch eine Zuführschnecke.

Um die Gleichmäßigkeit der Zuführung zu gewährleisten, kann es zweckmäßig sein, unterhalb der Zuführrinne eine Verteilerplatte anzuordnen, über der seitliche Leitbleche so angeordnet, daß sich auf der Verteilerplatte im Ruhezustand vollständige Schüttwinkel ausbilden, und wobei die Verteilerplatte mit einem Schwingantrieb antreibbar ist. Auf diese Weise läßt sich dosiert Schüttgut dem Wanderbett zuführen, das sich auf der Oberfläche entsprechend dem Schüttwinkel wellenfrei verteilt.

Wird Schüttgut mit nicht einheitlichen Korngrößen verwendet, kann bei relativ großen geneigten Oberflächen des Wanderbettes die Gefahr bestehen, daß eine Entmischung nach Korngrößen auftritt, wenn beispielsweise das Schüttgut von der Mitte des Reaktorgehäuses über den Schüttgutwinkel zur Seite hin abfällt. Soll eine derartige breitbandige Korngrößenverteilung des Schüttgutes verwendet werden, kann der Entmischungsneigung dadurch entgegengewirkt werden, daß oberhalb der Austragplatten vertikale Trennwände über die Breite des Reaktorgehäuses nebeneinander angeordnet sind, deren Oberkanten zur Bildung der abfallenden Oberfläche des Wanderbettes gestaffelt abfallen. Durch die Trennwände wird eine andersartige Befüllung des Reaktors bewirkt, indem zunächst der der Eintragvorrichtung nächste Teilschacht gefüllt wird, bis Schüttgut über seine Trennwand übertritt und in den nächsten Teilschacht fällt. Auf diese Weise wird erreicht, daß das zugeführte Schüttgut jeweils in einen Teilschacht fällt, bis dieser gefüllt ist und gegebenenfalls den Übertritt zum nächsten Teilschacht ermöglicht. Um dabei eine Haufenbildung auf einem Teilschacht zu verhindern, ist es zweckmäßig, wenn die Verbindungslinie zwischen den Oberkanten der Trennwände etwas steiler verläuft als der sich natürlich ausbildende Schüttwinkel des Schüttgutes.

Besonders bevorzugt ist die Ausbildung, in der jeder Austragplatte eine Trennwand zugeordnet ist, so daß sich oberhalb jeder Austragplatte ein vertikaler Teilschacht ausbildet, die über die Breite des Reaktors nebeneinander angeordnet sind und sich über die gesamte Tiefe des Reaktors erstrecken.

Es ist möglich, mehrere Wanderbetten in einem Reaktorgehäuse nebeneinander anzuordnen und die Wanderbetten durch eine Trennwand voneinander zu trennen. Im allgemeinen wird es allerdings zweckmäßiger sein, komlette Reaktoren mit ihren Reaktorgehäusen miteinander zu kombinieren, um mehrere Reaktoren parallel- oder hintereinanderzuschalten. Hintereinandergeschaltete Teilreaktoren können dabei mit verschiedenen Schüttgütern oder auch mit unterschiedlich hohen Wanderbetten versehen sein, um beispielsweise für ein zu reinigendes Gas unterschiedliche Teilaufgaben bei der Reinigung vorzunehmen. Bei unterschiedlichen Schüttgütern in hintereinandergeschalteten und übereinander angeordneten Teilreaktoren ist es notwendig, daß die Teilreaktoren eigene Eintrag- und Abführanordnungen aufweisen.

Die Abführanordnung für einen erfindungsgemäßen Reaktor besteht vorzugsweise aus in wenigstens zwei Ebenen angeordneten Abführrinnen, die mit Zwischenräumen versehen sind, wobei die Abführrinnen aller Ebenen einander überlappend die Breite der Öffnungen der Austragplatten ausfüllen. Dadurch wird einerseits erreicht, daß alles ausgetragene Schüttgut durch die Abführrinnen erfaßt und abgeführt wird, daß aber die Abführanordnung gasdurchlässig bleibt, so daß sie in einer vorteilhaften Anordnung oberhalb der Gaseintrittöffnung des Reaktorgehäuses angeordnet sein kann.

Insbesondere für staubende Schüttgüter kann es zweckmäßig sein, die Abführrinnen mit einer Neigung gestaffelt unterhalb der Austragplatten anzuordnen, die der Neigung der Staffelung der Austragplatten entspricht. Dadurch finden die aus den verschiedenen Stufen ausgetragenen Schüttgüter einen etwa gleichen Fallweg vor, der relativ kurz gehalten werden kann und einer Staubentwicklung entgegenwirkt.

Auch die Abführrinnen sind vorzugsweise schwingend angetrieben, wobei der Schwingantrieb außerhalb des Reaktorgehäuses sitzt und ggf. mit dem Schwingantrieb für die Austragplatten kombiniert werden kann.

Der erfindungsgemäße Schüttgutreaktor weist die meisten Vorzüge für den Gegenstrombetrieb auf, läßt sich aber natürlich auch im Gleichstrombetrieb fahren.

Der erfindungsgemäße Schüttgutreaktor kann mit einem Füllstandsanzeiger für das Schüttgut im Reaktorgehäuse ausgestattet sein, um beim Anlaufen des Reaktorbetriebes die Sicherheit zu haben, daß die gewünschte Wanderbetthöhe durch die Zuführeinrichtungen hergestellt worden ist.

Der Transport des Schüttgutes durch das Wanderbett kann kontinuierlich oder intermittierend erfolgen. Insbesondere bei sich ändernden Verhältnissen hinsichtlich der Gasbelastung im Filterbetrieb oder der Schüttgutbelastung bei einer thermochemischen Behandlung des Schüttgutes kann es zweckmäßig sein, eine Meßeinrichtung für die Druckdifferenz des Gasdruckes beim Eintritt und Austritt aus dem Wanderbett vorzusehen und an diese Meßeinrichtung eine Steuerungseinrichtung zur Steuerung der über die Eintrag- und Austragvorrichtung zu- bzw. abgeführte Schüttgutmenge in Abhängigkeit von dem Meßsignal der Meßeinrichtung für die Druckdifferenz anzuschließen.

Der erfindungsgemäße Schüttgutreaktor läßt sich vorteilhaft modular aufbauen und zu Anordnungen aus mehreren vollständigen Reaktoren kombinieren. Bei einer Anordnung mehrere vollständiger Reaktoren nebeneinander, in der diese parallel geschaltet werden, sind an die Reaktoren vorzugsweise eine gemeinsame Gaszuführungs- und eine gemeinsame Gasabführungsleitung angesetzt. Dabei ist es zur Ausbildung gleicher Strömungsverhältnisse in den parallel geschalteten Reaktoren vorteilhaft, wenn sich die Gaszuführungsleitung von einem Aufgabeende aus im Querschnitt über die Breite der Reaktoren kontinuierlich verengt und sich die Gasabführungsleitung konisch zum Gasabgabeende erweitert.

Die Reaktoren können auch übereinander angeordnet werden, wobei in diesem Fall sowohl eine Parallel- als auch eine Serienschaltung möglich ist. Bei der Serienschaltung ist die gesamte Anordnung mit einer Gaszuführungsleitung und einer Gasabführungsleitung an den verschiedenen Enden der Anordnung versehen. Bei der Parallelschaltung weist jeder Reaktor in der Anordnung übereinander eine eigene Gaszuführungs- und Gasabführungsleitung auf. Die Gasabführungs- und Gaszuführungsleitungen sind vorzugsweise als an die Reaktorgehäuse ansetzbare Teile ausgebildet, so daß ein modularer Aufbau sowohl der Teilreaktoren als auch der zwischengeschalteten oder an den Enden angesetzten Gasleitungen die Flexibilität beim Einsatz des erfindungsgemäßen Schüttgutreaktors gewährleistet.

Die Flexibilität wird noch dadurch unterstützt, daß die Reaktorgehäuse vorgefertigt werden können und die Funktionsteile, nämlich alle bewegbaren Teile des Reaktors als mit ihrem Antrieb zu einer Einheit ausgebildet in das Reaktorgehäuse einschiebbar sind, wobei die Antriebe außerhalb des Reaktorgehäuses verbleiben.

In Abhängigkeit von der Rieselfähigkeit des Schüttgutes kann es zweckmäßig sein, die Austragplatten gegenüber der Horizontalen etwas geneigt anzuordnen. Fällt die Neigung zu der Kante der Austragplatten ab, über die das Schüttgut herabfällt, wird das Austragen bei schwerer fließendem Schüttgut unterstützt. Der Neigungswinkel sollte dabei größenordnungsmäßig 5° betragen. Für sehr leicht fließendes Schüttgut kann es zweckmäßig sein, zumindest im Stillstand der Austragplatte die Neigung zur freien Kante der Austragplatten hin ansteigen zu lassen, um ein unbeabsichtigtes Ausrieseln des Schüttgutes während des Stillstands zu vermeiden.
Werden die Platten angetrieben, kann es zweckmäßig sein, die eingestellte Neigung wieder aufzuheben und die Austragplatten horizontal zu stellen. In jedem Fall ist es zweckmäßig, die Austragplatten in der Neigung verstellbar auszubilden, um eine Änderung der Neigung für unterschiedliche Betriebsarten oder unterschiedliche Schüttgüter herbeiführen zu können.

Die Erfindung soll im folgenden anhand von in der Zeichnung dargestellten Ausführungsbeispielen näher erläutert werden. Es zeigen:
- Figur 1 -: einen quer zur Tiefe des Reaktorgehäuses verlaufenden Querschnitt durch einen Reaktor
- Figur 2 -: einen Querschnitt gemäß Figur 1 durch einen Reaktor mit einer modifizierten Abführungsanordnung für das Schüttgut
- Figur 3 -: die Anordnung zweier kompletter Reaktoren übereinander in einer Hintereinanderschaltung dieser Reaktoren
- Figur 4 -: einen Anordnung von jeweils drei Reaktoren nebeneinander in zwei Etagen, wobei alle Reaktoren parallel geschaltet sind.
- Figur 5 -: einen Querschnitt durch einen Reaktor analog der Figuren 1 und 2 mit über den Austragplatten vorgesehenen Trennwänden.
- Figur 6 -: einen Schnitt durch einen gegenüber den Figuren 1, 2 und 5 modifizierten Reaktor.
- Figur 7 -: einen senkrecht zu der Schnittdarstellung gemäß Figur 5 stehenden Schnitt entlang der Linie VII -VII in Figur 6.

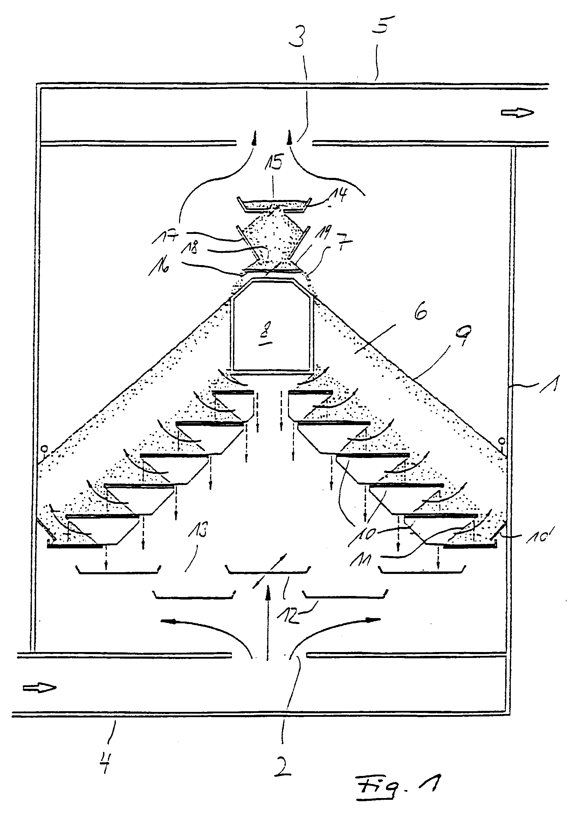

Figur 1 läßt ein rechteckiges Reaktorgehäuse 1 erkennen, das eine Gaseintrittsöffnung 2 im Boden und eine Gasaustrittsöffnung 3 an der Oberseite aufweist. An die Gaseintrittsöffnung 2 ist eine Gaszuführungsleitung 4 und an die Gasaustrittsöffnung 3 eine Gas-abführungsleitung 5 angeschlossen.

Im Reaktorgehäuse ist ein Wanderbett 6 mit Schüttgut 7 ausgebildet, das sich von einem Mittelstück 8 aus mit zu den Seitenwänden des Reaktorgehäuses 1 abfallender Oberfläche 9 erstreckt.

Auf der Unterseite des Wanderbettes 6 sind sechs Etagen mit Austragplatten 10 dargestellt, die von der Mitte ausgehend gestaffelt in überlappender Form zu den Seitenwänden hin angeordnet sind und sich dabei auf einer Neigungslinie befinden, die parallel zur Oberfläche 9 des Wanderbettes 6 verläuft. Die Austragplatten 10 weisen einen solchen Höhenabstand voneinander und einen solchen Überlappungsgrad auf, daß sich auf ihnen jeweils ein vollständiger Schüttwinkel 11 des Schüttgutes 7 ausbildet, so daß im Ruhezustand kein Schüttgut durch die durch die Austragplatten gebildete Austraganordnung hindurchfällt.

Um einen definierten Austrag des Schüttgutes 7 aus dem Wanderbett 6 zu ermöglichen, sind die Austragplatten 10 mit einem (nicht da!gestellten) Schwingantrieb verbunden und in Schwingung versetzbar. Dadurch verändert sich der Schüttwinkel 11 so, daß das Schüttgut über die jeweilige Kante der Austragplatte 10 herunterfällt. Zum Abtransport des so ausgetragenen Schüttgutes 7 ist eine Abführvorrichtung aus in zwei Etagen angeordneten Abführrinnen 12 vorgesehen. Die Abführrinnen sind so angeordnet, daß sie in jeder Etage Zwischenräume 13 bilden und daß die Abführrinnen 12 in den verschiedenen Etagen überlappend die gesamte Breite der Öffnungen der Austragplatten 10 abdecken. Auf diese Weise ist sichergestellt, daß alles ausgetragene Schüttgut 7 von den Abführrinnen 12 aufgefangen und abtransportiert wird. Hierzu sind die Abführrinnen 12 mit einem sie in Längsrichtung bewegenden Schwingantrieb versehen, der den Abtransport des Schüttgutes in Längsrichtung bewirkt. Die Anordnung der Abführrinnen 12 in mehreren Etagen hat den Vorteil, daß die Abführanordnung gasdurchlässig bleibt, so daß sie oberhalb der Gaseintrittsöffnung 2 angeordnet sein kann, wie dies in Figur 1 dargestellt ist.

Die Zuführung des Schüttgutes 7 zu dem Wanderbett 6 geschieht mit Hilfe einer mittig oberhalb des Mittelstücks 8 angeordneten Zuführrinne 14, die in dem dargestellten Ausführungsbeispiel einen durchgehenden mittigen Schlitz 15 aufweist und in Längsrichtung schwingend bewegbar ist. Unterhalb des Schlitzes 15 befindet sich eine Verteilerplatte 16, die ebenfalls in Längsrichtung schwingend antreibbar ist. Oberhalb der Verteilerplatte 16 sind zwei trichterförmig aufeinander zulaufende Leitbleche 17 angeordnet, die einen so engen Schlitz 18 bilden, daß sich auf der Verteilerplatte 16 im Ruhezustand ein vollständiger Schüttwinkel 19 auf beiden Seiten ausbildet, so daß eine Zufuhr von Schüttgut 7 zum Wanderbett 6 im Ruhezustand unterbunden ist. Erst beim Antreiben der Verteilerplatte 16 fällt Schüttgut auf beiden Seiten der Verteilerplatte 16 herunter und verteilt sich aufgrund der Schütteigenschaften des Schüttgutes 7 auf der durch den Schüttwinkel bestimmten Oberfläche 9 des Wanderbettes 6.

In Figur 1 zeigen die durchgezogenen Pfeile den Weg des Gases von der Gaseintrittsöffnung 2 über die Schüttgutwinkel 11, die die Gaseintrittsflächen zum Wanderbett 6 bilden. Nach dem Durchströmen des Wanderbettes 6 sammelt sich das Gas an der Gasaustrittsöffnung 3 und wird über die Gasabführungsleitung 5 abgeleitet. Diese Darstellung gilt für den Betrieb im Gegenstrom. Bei einer Anwendung als Filter gelangt somit Rohgas über die Gaseintrittsleitung 4 in das Reaktorgehäuse 1 und verläßt ihn über die Gasabführungsleitung 5 als Reingas. Von den Seitenwänden des Reaktorgehäuses 1 erstrecken sich unmittelbar oberhalb der untersten Austragplatten 10 shräge Leitbleche 10' bis unmittelbar über die unterste Austragplatte 10, um einen Austritt von Schüttgut 7 über die wandseitige Kante der unteren Austragplatte 10 zu verhindern.

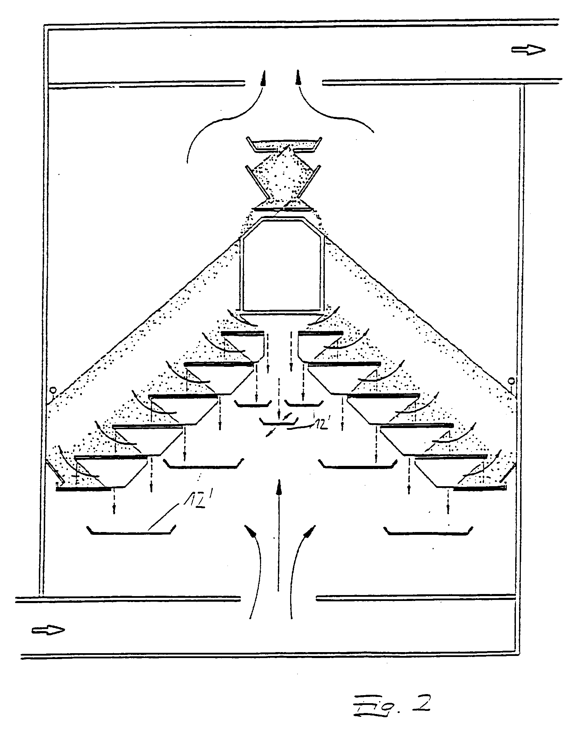

Der in Figur 2 dargestellte Reaktor ist in allen wesentlichen Teilen identisch mit dem in Figur 1 dargestellten. Die einzige Modifikation besteht darin, daß die Abführrinnen 12' in diesem Fall in vier Etagen angeordnet sind, wobei jeweils drei der Abführrinnen 12' etwa in der Neigung der Austragplatten 10 gestaffelt und einander überlappend angeordnet sind, so daß sich eine analoge symmetrische Anordnung ergibt. Der mittlere Zwischenraum zwischen den beiden oberen Abführrinnen 12' wird durch eine mittig nahe darunter angeordnete Abführrinne 12' abgedeckt, so daß sich die Abführrinnen 12' lückenlos über die gesamte relevante Breite des Reaktors erstrecken. Die Anordnung der Abführrinnen 12' hat gegenüber der Anordnung der Abführrinnen 12 in Figur 1 den Vorteil, daß die Fallhöhe für das Schüttgut 7 begrenzt ist, was für Staub entwickelnde Schüttgüter 7 vorteilhaft ist.

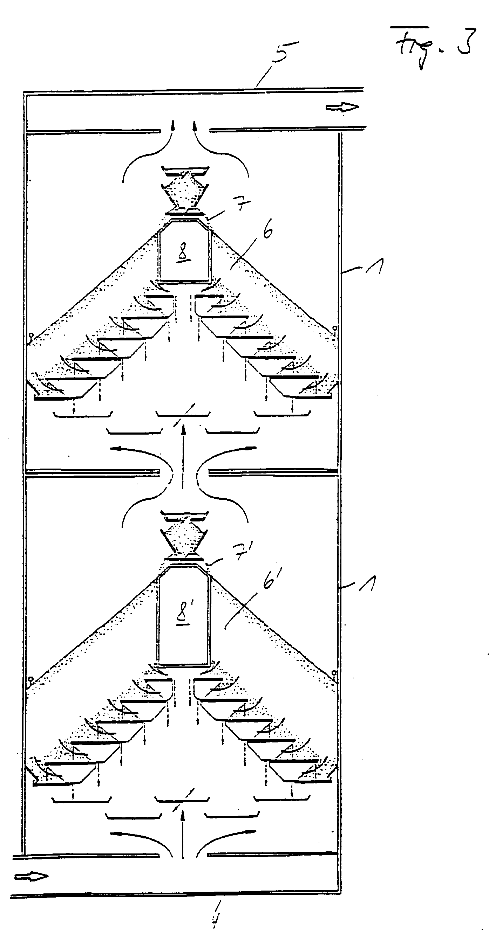

Figur 3 zeigt eine Anordnung zweier vollständiger Reaktorgehäuse 1 übereinander, wobei der Aufbau der Reaktoren dem in Figur 1 dargestellten Aufbau entspricht. Da die beiden Reaktoren hintereinandergeschaltet sind, weist nur das untere Reaktorgehäuse 1 eine Gaszuführungsleitung 4 und nur das obere Reaktorgehäuse 1 eine Gasabführungsleitung 5 auf. Ferner ist erkennbar, daß das Mittelstück 8' des unteren Reaktorgehäuses 1 höher ausgebildet ist, so daß es einem höher ausgebildeten Wanderbett 6' entspricht. Das höhere Wanderbett 6' kann beispielsweise aus einem grobkörnigen Schüttgut 7' bestehen, um die größeren Staubpartikel aus einem mit Staub beladenen Gas abzuscheiden, das über die Gaseintrittsleitung 4 in den unteren Reaktor gelangt. Das so vorgereinigte Gas gelangt dann in den oberen Reaktor, in dem die Staubfeinstteile mit Hilfe eines aus feinkörnigerem Schüttgut 7 bestehenden flachen Filterbettes ausgefiltert werden. In einem anderen Anwendungsfall kann der untere Reaktor mit einem Filtermedium entsprechenden Kornbandes für die Staubabscheidung ausgerüstet werden, während
im oberen Reaktor mit einem Adsorbens im Gas enthaltene gasförmige Schadstoffe adsorbiert werden. Da das feinkörnigere Schüttgut 7 einen höheren Strömungswiderstand bildet, ist hierfür die Verwendung eines Wanderbettes 6 mit einer geringeren Höhe zweckmäßig.

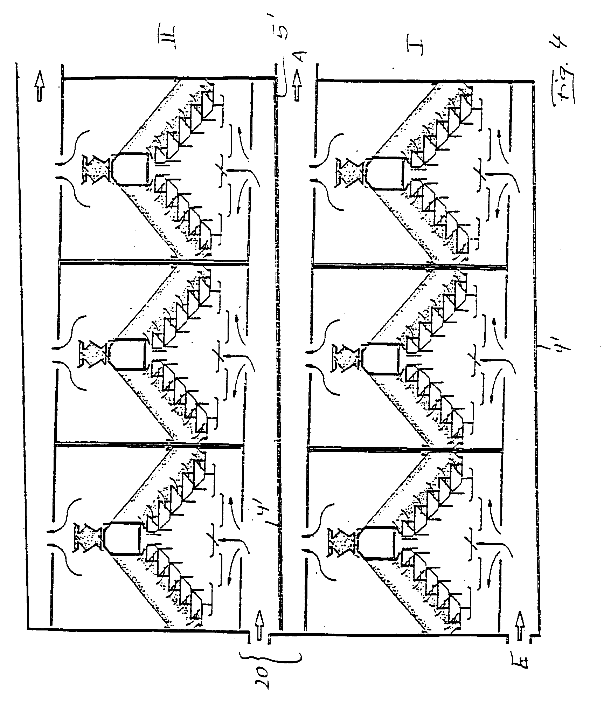

Figur 4 zeigt eine Anordnung von jeweils drei Reaktorgehäusen 1 nebeneinander in zwei Etagen I, II. In dem dargestellten Ausführungsbeispiel sind alle Reaktoren parallel geschaltet. Sie sind an eine modifizierte Gaszuführungsleitung 4' und Gasabführungsleitung 5' angeschlossen. Die Modifikation ergibt sich dadurch, daß über die Breite der Reaktoren die Gaszuführungsleitung 4' von einem Aufgabeende E aus im Querschnitt kontinuierlich abnimmt und die Gasabführungsleitung 5' zu einem Ausgangsende A im Querschnitt kontinuierlich zunimmt. Diese Querschnittsveränderungen haben den Zweck, für die nebeneinandergeschalteten Reaktoren gleiche Druckverhältnisse zu gewährleisten, so daß eine gleichmäßige Strömung durch die nebeneinander angeordneten und parallelgeschalteten Reaktoren gewährleistet ist.

Bei den übereinandergeschalteten Reaktoren ergänzen sich die konischen Querschnittsveränderungen der aneinanderliegenden Gasabführungsleitung 5' der unteren Etage I und der Gaszuführungsleitung 4' der oberen Etage II so, daß sie zweckmäßig zu einer modularen Einheit 20 zusammenfaßbar sind.

Selbstverständlich können die Reaktion der verschiedenen Etagen I, II auch hintereinandergeschaltet werden, wodurch die Einheit 20 komplett entfällt.

Es ist ohne weiteres erkennbar, daß die dargestellten Ausführungsbeispiele beide Modifikationsmöglichkeiten aufweisen.

Dies gilt beispielsweise hinsichtlich der Schüttgutzuführung, die nicht unbedingt in einer Schwingungstechnik erfolgen muß, um eine gleichmäßige Zuführung des Schüttgutes 7, 7' zum Wanderbett 6, 6' zu gewährleisten. Die Schüttgutzuführung könnte zu der Zuführungsrinne 14 auch mit Hilfe einer Schnecke oder ähnlicher bewährter Fördermittel erfolgen. Ferner ist es denkbar, daß auf den Einsatz einer Verteilerplatte 16 vollständig verzichtet werden kann, wenn das Schüttgut 7, 7' eine gleichmäßige Verteilung bereits aus der Zuführungsrinne 14 ermöglicht. Hierfür kann diese Zuführungsrinne 14 statt mit dem zentralen Schlitz 15 auch mit seitlichen, über ihre Längsrichtung gleich verteilten Öffnungen versehen sein.

Die schwingend angetriebenen Teile des Reaktors müssen nicht kontinuierlich schwingen. Ein intermittierender Betrieb ist in vielen Fällen ebenfalls möglich bzw. sogar angezeigt. So wird beispielsweise die Zuführung des Schüttgutes 7, 7' über die Zuführungsrinne 14 und die Verteilerplatte 16 nicht mit einem kontinuierlichen Betrieb der Zuführungsrinne 14 und der Verteilerplatte 16 erfolgen. Vielmehr wird zunächst die Förderrinne 14 angetrieben werden, um einen ausreichenden Füllungsgrad der Anordnung zu gewährleisten. Anschließend kann dann die Verteilerplatte 16 angetrieben werden, um die Zuführung des Schüttgutes 7, 7'zum Wanderbett 6, 6' vorzunehmen. Es könnte daher daran gedacht werden, die Zuführungsrinne 14 und die Verteilerplatte 16 abwechselnd mit demselben Schwingantrieb anzutreiben. Dabei kann es zweckmäßig sein, wenn gleichzeitig mit der Verteilerplatte 16 die Austragplatten 10 in Schwingung versetzt werden.

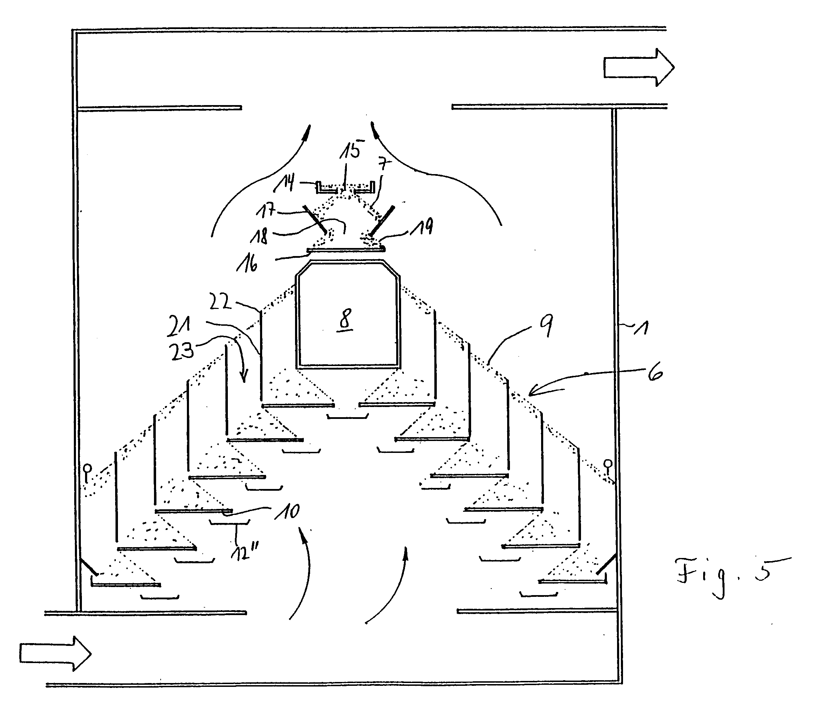

Figur 5 zeigt ein Ausführungsbeispiel, das bezüglich der Eintragvorrichtung 14 bis 18 sowie der Austragplatten 10 den Ausführungsformen gemäß Figur 1 und 2 entspricht. Ähnlich den Abführrinnen 12' in Figur 2 sind Abführrinnen 12'' einander überlappend gestaffelt unter den Austragkanten der Austragplatten 10 angeordnet, bilden also ebenfalls eine zu den Wänden des Reaktorgehäuses 1 abfallende Anordnung.

An den jeweils äußeren Kanten der Austragplatten 10 schließt sich über die Breite des Reaktorgehäuses 1 nebeneinander angeordnet jeweils eine Trennwand 21 an, deren Oberkanten 22 auf einer Verbindungslinie liegen, die etwas steiler verläuft als der sich für das Schüttgut 7 natürlich ausbildende Schüttgutwinkel. Der Unterschied ist aber nur geringfügig, damit für alle Austragplatten 10 ein gleich hoher wirksamer Teilschacht 23 gebildet wird.

Das über die Eintragvorrichtung 14 bis 18 zugeführte Schüttgut füllt zunächst die beiden inneren Teilschächte 23, bis das Schüttgut über die Oberkante 22 der entsprechenden Trennwand 21 hinübertritt und in den nächsten Teilschacht 23 fällt, bis dieser gefüllt ist, u.s.w . Durch diese, durch die Trennwände 21 erzwungene Befüllung der Teilschächte 23 wird einer Entmischungsneigung des Schüttguts 7 auf dem Weg von der Eintragvorrichtung 14 bis 18 bis zum unteren Rand des Wanderbetts 6 entgegengewirkt, da bei gefüllten inneren Teilschächten das neu zugeführte Schüttgut bis zu dem zu füllenden Teilschacht hinunterrieselt, und zwar in der gesamten Kornbandbreite, so daß der Teilschacht mit der gesamten Kornbandbreite gefüllt wird.

Obwohl die in der Zeichnung dargestellten Ausführungsbeispiele alle eine mittige Eintragvorrichtung 14 bis 18 und zu den Wänden abfallende Wanderbetten 6 zeigen, ist es auch denkbar, die Eintragvorrichtung an den Seiten des Reaktorgehäuses 1 vorzusehen und zur Mitte hin abfallende Wanderbettoberflächen vorzusehen. In entsprechender Weise müßten dann die Austragplatten 10 von den Wänden gestaffelt zum Gehäuseinneren hin abfallend angeordnet sein.

Figur 5 verdeutlicht, daß in den einzelnen Teilschächten 23 Oberflächen 9 des Wanderbettes 6 ausgebildet werden, deren Schüttgutwinkel etwas flacher als die Verbindungslinie zwischen den Oberkanten 22 der Trennwände 21 verläuft.

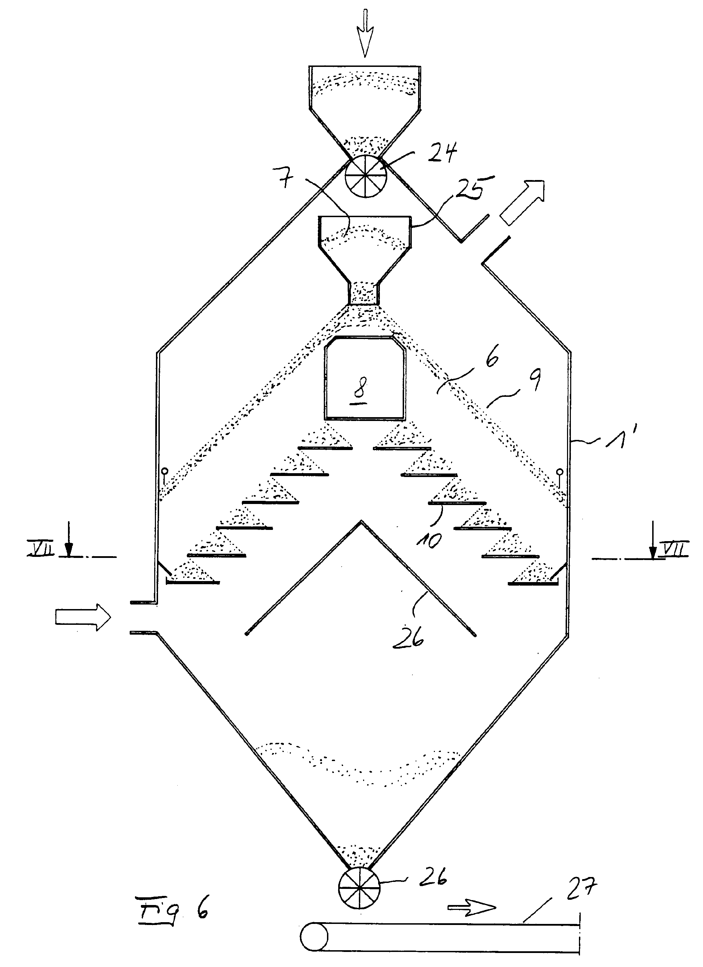

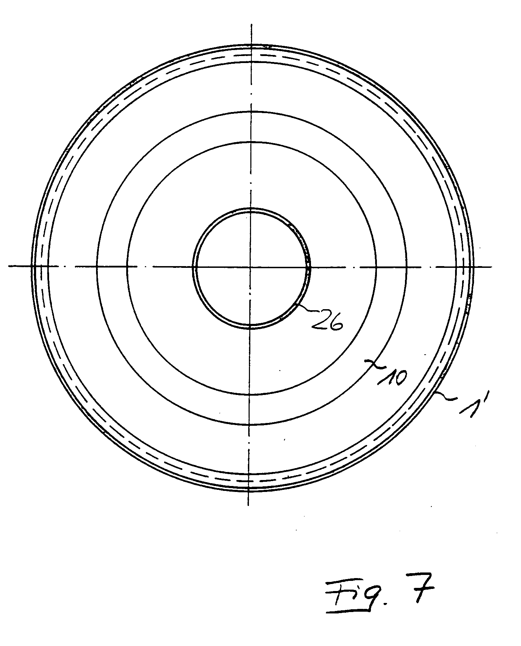

Der in den Figuren 6 und 7 dargestellte modifizierte Reaktor 1' weist einen runden Querschnitt auf, wie sich aus Figur 7 ergibt. Demzufolge sind die Austragplatten 10 ringförmig ausgebildet. In dieser Ausführungsform werden die Austragplatten 10 vorzugsweise in vertikaler Richtung hin- und herbewegt, vollführen also eine oszillierende Bewegung in lotrechter Richtung.

Eine weitere Modifikation besteht in der Zuführung des Schüttgutes, das über eine Zellenradschleuse 24 in einen Trichter 25 gelangt, dessen unterer Auslaß in der Spitze des Wanderbettes 6 endet. Entsprechend dem sich an der Oberfläche 9 natürlich ausbildenden Schüttgutwinkels sind die Austragplatten 10 kaskadenförmig angeordnet. Ein unterhalb der Austragplatten 10 angeordnetes V-förmiges Prallblech 26 sorgt für eine Verminderung der Fallhöhe und dient zur Schonung des körnigen Schüttgutes 7. Der Boden des Reaktors 1' ist trichterförmig verjüngt ausgebildet und endet in einer weiteren Zellenradschleuse 26, mit der das Schüttgut 7 dosiert auf ein Abförderband 27 austragbar ist.

Die erfindungsgemäße Ausbildung des Schüttgutreaktors 1, 1' ist somit sowohl mit Reaktoren mit rundem wie auch mit eckigem Querschnitt möglich. Verschiedene Zuführungs- und Abführungsarten für das Schüttgut 7 können realisiert werden. Die zum Ausrieseln des Schüttgutes 7 führende Hin- und Herbewegung der Austragplatten 10 kann in horizontaler Richtung wie auch in vertikaler Richtung erfolgen.
Li/he/ne

## Patentansprüche

1. Schüttgutreaktor mit einem in einem Reaktorgehäuse angeordneten, aus dem Schüttgut aufgebauten Wanderbett mit einer Eintragvorrichtung auf der Oberseite und einer Austragvorrichtung auf der Unterseite des Wanderbettes sowie mit einer Eintrittsöffnung und einer Austrittsöffnung für ein Gas in den bzw. aus dem Reaktor, in dem das Wanderbett an seiner Unterseite durch kaskadenförmig gestaffelte Platten, die sich in überlappender Form zu den Seitenwänden des Reaktors hin erstrecken, begrenzt ist, **dadurch gekennzeichnet, daß** die Platten (10) einen solchen Höhenabstand voneinander und einen solchen Überlappungsgrad aufweisen, daß sich auf den Platten (10) ein Schüttwinkel (11) des Schüttgutes (7, 7') ausbildet, durch den das Durchrieseln von Schüttgut (7, 7') im Ruhezustand verhindert wird, und daß die Platten (10) mit einem Schwingantrieb verbunden sind, so daß durch die Bewegung der Platten (10) das Schüttgut (7, 7') von ihren Kanten durch die Plattenzwischenräume herunterfällt und daß sich die Kanten der Platten (10) auf einer Neigungslinie befinden, die parallel zur abfallenden Oberfläche (9) des Wanderbettes (6, 6') verläuft.

2. Schüttgutreaktor nach Anspruch 1, dadurch gekennzeichnet, daß die Platten (10) in ihrer Längsrichtung hin- und her- bewegbar sind.

3. Schüttgutreaktor nach Anspruch 1 oder 2, dadurch gekennzeichnet, daß das Wanderbett (6, 6') symmetrisch mit zwei abfallenden Flächen (9) an der Oberfläche ausgebildet ist und daß entsprechend symmetrisch zwei zu den Wänden des Reaktorgehäuses (1) kaskadenförmig abfallende Gruppen von Platten (10) angeordnet sind.

4. Schüttgutreaktor nach Anspruch 3, dadurch gekennzeichnet, daß ein Mittelstück (8, 8') das Wanderbett (6, 6') teilt.

5. Schüttgutreaktor nach Anspruch 4, dadurch gekennzeichnet, daß das Mittelstück (8, 8') eine solche Breite aufweist, daß sich auf der obersten Platte (10) ein etwa gleicher Schüttwinkel (11) ausbildet wie auf den darunter angeordneten Platten (10).

6. Schüttgutreaktor nach Anspruch 1, gekennzeichnet durch eine sich über die Tiefe des Reaktorgehäuses (1) erstreckende Zuführrinne (14), die mit einer oder mehreren Öffnungen versehen ist.

7. Schüttgutreaktor nach Anspruch 6, dadurch gekennzeichnet, daß die Zuführrinne (14) durch einen Schwingantrieb angetrieben ist.

8. Schüttgutreaktor nach Anspruch 6 oder 7, dadurch gekennzeichnet, daß unterhalb der Zuführrinne (14) eine Verteilerplatte (16) angeordnet ist, daß über der Verteilerplatte (16) seitliche Leitbleche (17) so angeordnet sind, daß sich auf der Verteilerplatte (16) im Ruhezustand vollständige Schüttwinkel (19) ausbilden und daß die Verteilerplatte (16) mit einem Schwingantrieb antreibbar ist.

9. Schüttgutreaktor nach einem der Ansprüche 1 bis 8, gekennzeichnet durch in wenigstens zwei Ebenen angeordnete Abführrinnen (12, 12'), die mit Zwischenräumen (13) versehen sind, wobei die Abführrinnen (12, 12') aller Ebenen einander überlappend die Breite der Öffnungen der Austragplatten (10) ausfüllen.

10. Schüttgutreaktor nach Anspruch 9, dadurch gekennzeichnet, daß die Abführrinnen (12') mit einer der Neigung der Staffelung der Platten (10) entsprechenden Neigung gestaffelt unterhalb der Austragplatte (10) angeordnet sind.

11. Schüttgutreaktor nach Anspruch 9 oder 10, dadurch gekennzeichnet, daß die Abführrinnen (12, 12') schwingend angetrieben sind.

12. Schüttgutreaktor nach einem der Ansprüche 1 bis 11, dadurch gekennzeichnet, daß die Platten (10) zu einer Wand des Reaktorgehäuses (1) kaskadenförmig abfallend angeordnet sind und daß die Oberfläche (9) des Wanderbettes ebenfalls zu der Wand des Reaktorgehäuses (1) abfällt.

13. Schüttgutreaktor nach einem der Ansprüche 1 bis 12, dadurch gekennzeichnet, daß oberhalb der Platten (10) vertikale Trennwände (21) über die Breite des Reaktorgehäuses (1) nebeneinander angeordnet sind, deren Oberkanten (22) zur Bildung der abfallenden Oberfläche (9) des Wanderbettes (6) gestaffelt abfallen.

14. Schüttgutreaktor nach Anspruch 13, dadurch gekennzeichnet, daß die Verbindungslinie zwischen den Oberkanten (22) der Trennwände (21) etwas steiler verläuft als der sich natürlich ausbildende Schüttwinkel des Schüttgutes (7, 7').

15. Schüttgutreaktor nach Anspruch 13 oder 14, dadurch gekennzeichnet, daß jeder Platte (10) ein durch wenigstens eine Trennwand (21) begrenzter Teilschacht (23) zugeordnet ist.

16. Schüttgutreaktor nach einem der Ansprüche 1 bis 15, dadurch gekennzeichnet, daß die Platten (10) gegenüber der Horizontalen geneigt angeordnet sind.

17. Schüttgutreaktor nach Anspruch 16, dadurch gekennzeichnet, daß die Neigung der Austragplatten (10) einstellbar ist.

18. Schüttgutreaktor nach einem der Ansprüche 1 bis 17, dadurch gekennzeichnet, daß die Hin- und Herbewegung der Platten (10) in vertikaler Richtung erfolgt.

19. Schüttgutreaktor nach einem der Ansprüche 1 bis 18, dadurch gekennzeichnet, daß der Querschnitt des Reaktors (1') rund ist.

## Revendications

1. Réacteur pour matériau en vrac, comportant un lit circulant disposé dans la cuve du réacteur et constitué par le matériau en vrac, muni d'un dispositif d'introduction placé sur le côté supérieur et d'un dispositif d'évacuation placé sur le côté inférieur dudit lit circulant, ainsi que d'un orifice d'entrée et un orifice de sortie pour l'entrée et la sortie d'un gaz du réacteur, ledit lit circulant étant limité sur sa face inférieure par des plaques montées en cascade qui s'étendent, en se chevauchant mutuellement, jusqu'aux parois latérales du réacteur, caractérisé en ce que la distance entre les plaques (10) dans le sens de la hauteur et leur degré de chevauchement sont tels que sur lesdites plaques (10) se forme un angle de talus (11) du matériau en vrac (7, 7') qui empêche l'écoulement du matériau en vrac (7, 7') à l'état de repos, et en ce que lesdites plaques (10) sont reliées à un mécanisme oscillant de telle sorte que par le mouvement des plaques (10), le matériau en vrac (7, 7') tombe des bords des plaques à travers les interstices existant entre les plaques et en ce que les bords desdites plaques (10) se trouvent sur une ligne inclinée qui s'étend parallèlement à la surface inclinée (9) du lit circulant (6, 6').

2. Réacteur pour matériau en vrac selon la revendication 1, caractérisé en ce que les plaques (10) sont mobiles selon un mouvement de va-et-vient dans leur direction longitudinale.

3. Réacteur pour matériau en vrac selon la revendication 1 ou 2, caractérisé en ce que le lit circulant (6, 6') présente une surface supérieure symétrique comportant deux faces inclinées (9), et en ce que de manière correspondante, deux groupes de plaques (10) sont disposés symétriquement en cascade en étant inclinés vers les parois de la cuve (1) du réacteur.

4. Réacteur pour matériau en vrac selon la revendication 3, caractérisé en ce qu'un élément central (8, 8') divise le lit circulant (6, 6').

5. Réacteur pour matériau en vrac selon la revendication 4, caractérisé en ce que l'élément central (8, 8') a une largeur telle que sur la plaque (10) la plus haute il se forme un angle de talus (11) sensiblement égal à celui qui se forme sur les plaques (10) disposées au-dessous.

6. Réacteur pour matériau en vrac selon la revendication 1, caractérisé par une rigole d'amenée (14) qui s'étend sur la profondeur de la cuve (1) du réacteur et qui est munie d'un ou de plusieurs orifices.

7. Réacteur pour matériau en vrac selon la revendication 6, caractérisé en ce que la rigole d'amenée (14) est entraînée par un mécanisme oscillant.

8. Réacteur pour matériau en vrac selon la revendication 6 ou 7, caractérisé en ce que sous la rigole d'amenée (14) est disposée une plaque de distribution (16), en ce que sur cette plaque (16) sont disposées des tôles déflectrices latérales (17) de manière telle que sur la plaque (16) se forment, à l'état de repos, des angles de talus entiers (19) et que ladite plaque (16) peut être entraînée par un mécanisme oscillant.

9. Réacteur pour matériau en vrac selon l'une quelconque des revendications 1 à 8, caractérisé par des rigoles d'évacuation (12, 12') disposées dans au moins deux plans, lesquelles sont munies d'espaces intermédiaires (13), de sorte que lesdites rigoles d'évacuation (12, 12') de tous les plans remplissent, en se chevauchant mutuellement, la largeur des orifices des plaques (10) d'entraînement.

10. Réacteur pour matériau en vrac selon la revendication 9, caractérisé en ce que les rigoles d'évacuation (12') sont disposées en gradins sous les plaques d'entraînement (10) avec une inclinaison qui correspond à celle de la disposition en gradins des plaques (10).

11. Réacteur pour matériau en vrac selon la revendication 9 ou 10, caractérisé en ce que les rigoles d'évacuation (12, 12') sont entraînées de manière oscillante.

12. Réacteur pour matériau en vrac selon l'une des revendications 1 à 11, caractérisé en ce que les plaques (10) sont disposées de manière à être inclinées en cascade vers une paroi de la cuve (1) du réacteur, et en ce que la surface supérieure (9) du lit circulant est également inclinée vers la paroi de ladite cuve (1) du réacteur.

13. Réacteur pour matériau en vrac selon l'une des revendications 1 à 12, caractérisé en ce qu'au-dessus des plaques (10) sont disposées côte à côte, sur la largeur de la cuve (1) du réacteur, des parois de séparation verticales (21) dont les bords supérieurs (22) sont également disposés en gradins pour former la surface supérieure (9) inclinée du lit circulant (6).

14. Réacteur pour matériau en vrac selon la revendication 13, caractérisé en ce que la ligne de liaison entre les bords supérieurs (22) des parois de séparation (21) est légèrement plus inclinée que l'angle de talus naturellement formé par le matériau en vrac (7, 7').

15. Réacteur pour matériau en vrac selon la revendication 13 ou 14, caractérisé en ce qu'à chaque plaque (10) est associé un puits partiel (23) délimité par au moins une paroi de séparation (21).

16. Réacteur pour matériau en vrac selon l'une des revendications 1 à 15, caractérisé en ce que les plaques (10) sont disposées de manière inclinée par rapport à l'horizontale.

17. Réacteur pour matériau en vrac selon la revendication 16, caractérisé en ce que l'inclinaison des plaques d'entraînement (10) est réglable.

18. Réacteur pour matériau en vrac selon l'une des revendications 1 à 17, caractérisé en ce que le mouvement de va-et-vient des plaques (10) s'effectue en direction verticale.

19. Réacteur pour matériau en vrac selon l'une des revendications 1 à 18, caractérisé en ce que la section transversale du réacteur (1') est ronde.

## Claims

1. Bulk material reactor, having a migration bed which is arranged in a reactor housing and is built up out of the bulk material and has a charging means at the upper side and a discharging means at the underside of the migration bed, and has an entry opening and an exit opening for a gas into and out of the reactor, in which the migration bed is delimited at its underside by plates which are staggered in the manner of a cascade and extend in an overlapping shape towards the side walls of the reactor, characterized in that the plates (10) have a vertical spacing from one another and a degree of overlap which are such that an angle of repose (11) of the bulk material (7, 7') is formed on the plates (10) which prevents bulk material (7, 7') from trickling through in the rest state, and in that the plates (10) are connected to an oscillation drive so that, as a result of the movement of the plates (10), the bulk material (7, 7') falls from their edges through the intermediate spaces between the plates, and in that the edges of the plates (10) are on a line of inclination which runs parallel to the falling surface (9) of the migration bed (6, 6').

2. Bulk material reactor according to Claim 1, characterized in that the plates (10) can be moved to and fro in their longitudinal direction.

3. Bulk material reactor according to Claim 1 or 2, characterized in that the migration bed (6, 6') is constructed to be symmetrical, with two falling surfaces (9) at the surface, and in that two groups of plates (10) falling in the manner of a cascade to the walls of the reactor housing (1) are arranged with corresponding symmetry.

4. Bulk material reactor according to Claim 3, characterized in that a centre piece (8, 8') divides the migration bed (6, 6').

5. Bulk material reactor according to Claim 4, characterized in that the centre piece (8, 8') has a width such that approximately the same angle of repose (11) is formed on the topmost plate (10) as on the plates (10) underneath.

6. Bulk material reactor according to Claim 1, characterized by a supply channel (14) which spans the top of the reactor housing (1) and is provided with one or more openings.

7. Bulk material reactor according to Claim 6, characterized in that the supply channel (14) is driven by an oscillation drive.

8. Bulk material reactor according to Claim 6 or 7, characterized in that a distributor plate (16) is arranged below the supply channel (14), in that baffle plates (17) are arranged above the distributor plate (16) such that in the rest state complete angles of repose (19) are formed on the distributor plate (16), and in that the distributor plate (16) may be driven by an oscillation drive.

9. Bulk material reactor according to one of Claims 1 to 8, characterized by removal channels (12, 12') which are arranged in at least two planes and are provided with intermediate spaces (13), the removal channels (12, 12') of all the planes occupying the width of the openings of the discharging plates (10) in a manner overlapping one another.

10. Bulk material reactor according to Claim 9, characterized in that the removal channels (12') are arranged below the discharging plate (10) staggered at an inclination corresponding to the inclination of staggering of the plates (10).

11. Bulk material reactor according to Claim 9 or 10, characterized in that the removal channels (12, 12') are driven in oscillating manner.

12. Bulk material reactor according to one of Claims 1 to 11, characterized in that the plates (10) are arranged to fall in the manner of a cascade towards a wall of the reactor housing (1), and in that the surface (9) of the migration bed also falls towards the wall of the reactor housing (1).

13. Bulk material reactor according to one of Claims 1 to 12, characterized in that vertical separation walls (21) are arranged next to one another above the plates (10) over the width of the reactor housing (1), and their upper edges (22) fall away in staggered manner to form the falling surface (9) of the migration bed (6).

14. Bulk material reactor according to Claim 13, characterized in that the connection line between the upper edges (22) of the separation walls (21) is somewhat steeper than the naturally formed angle of repose of the bulk material (7, 7').

15. Bulk material reactor according to Claim 13 or 14, characterized in that a part chute (23) which is delimited by at least one separation wall (21) is associated with each plate (10).

16. Bulk material reactor according to one of Claims 1 to 15, characterized in that the plates (10) are arranged to be inclined with respect to the horizontal.

17. Bulk material reactor according to Claim 16, characterized in that the inclination of the discharging plates (10) is adjustable.

18. Bulk material reactor according to one of Claims 1 to 17, characterized in that the to-and-fro movement of the plates (10) is in the vertical direction.

19. Bulk material reactor according to one of Claims 1 to 18, characterized in that the cross-section of the reactor (1') is round.
